# EUROPÄISCHE PATENTSCHRIFT

(11) **EP 0 513 664 B1**
(45) Veröffentlichungstag und Bekanntmachung des Hinweises auf die Patenterteilung: **12.04.1995**
(21) Anmeldenummer: 92107716.0
(22) Anmeldetag: 07.05.1992
(51) Int. Cl.: B23H 7/26, B23H 11/00, B23H 1/00, B23Q 39/02

(54) **Vorrichtung, insbesondere Funkenerosionsvorrichtung, sowie Verfahren zur Bearbeitung von Werkstücken**
Machining apparatus, in particular for electric discharge machining, and method of machining work pieces
Machine d'usinage, en particulier d'usinage par électroérosion, et procédé d'usinage de pièces

(30) Priorität: 15.05.1991 DE 4115896
(43) Veröffentlichungstag der Anmeldung: 19.11.1992
(73) Patentinhaber: AG für industrielle Elektronik AGIE Losone bei Locarno, CH-6616 Losone/Locarno (CH)
(72) Erfinder: Derighetti, René, Dr.-Ing., CH-6616 Losone (CH); Lauber, Nikolaus, CH-6653 Verscio (CH)
(74) Vertreter: Turi, Michael, Dipl.-Phys.

(56) Entgegenhaltungen:
- FR-A- 2 069 863
- GB-A- 2 163 380
- PATENT ABSTRACTS OF JAPAN vol. 7, no. 29 (M-191)(1174) 5. Februar 1983 & JP-A-57 184 633 (INOUE JAPAX KENKYUSHO K.K.)
- PATENT ABSTRACTS OF JAPAN vol. 10, no. 354 (P-521)(2410) 28. November 1986 & JP-A-61 152 328 (MITSUBISHI ELECTRIC CORP.)

## Beschreibung

Die Erfindung bezieht sich auf eine Vorrichtung, insbesondere auf eine Funkenerosionsvorrichtung zur Bearbeitung von Werkstücken, mit einem Maschinentisch zur Auflage eines Werkstückes, einem ersten Bearbeitungskopf, mindestens zwei Freiheitsgraden der Bewegung der Vorrichtung in und/oder parallel zur Haupt-Arbeitsebene des Werkstückes (X/Y-Ebene), sowie mindestens einem weiteren Freiheitsgrad der Bewegung senkrecht zur Haupt-Arbeitsebene (Z-Achse). Außerdem bezieht sich die Erfindung auf ein Verfahren zur Bearbeitung von Werkstücken, insbesondere auf ein Funkenerosionsverfahren, bei dem ein Werkstück auf einem Maschinentisch mit einem ersten Bearbeitungskopf mindestens in zwei Bewegungsrichtungen in und/oder parallel zur Haupt-Arbeitsebene des Werkstückes (X/Y-Ebene) und in mindestens einer weiteren Richtung (Z-Achse) senkrecht zur Hauptbearbeitungsebene bearbeitet wird.

Derartige Vorrichtungen und Bearbeitungsverfahren sind beispielsweise von Fräsmaschinen oder Funkenerosions-Senkmaschinen bekannt.

Im folgenden wird eine Terminologie verwendet, die der leichteren Lesbarkeit der Beschreibung dient, jedoch nicht einschränkend zu verstehen ist. Beispielsweise beziehen sich die Ausdrücke oben, unten, größer, kleiner usw. auf Maschinen in üblicher Arbeitsaufstellung und Größe.

Bei Vorrichtungen der eingangs genannten Art ist der Verfahrweg der Maschine in der X/Y-Ebene des Werkstückes durch die Verfahrwege eines Maschinentisches und/oder eines oberen Schlittens vorgegeben.

Bei Elektroerosions-Senkmaschinen besteht insbesondere bei mittleren und großen Maschinen zwischen gewünschten bzw. in der Praxis gebrauchten Elektrodengewichten und den Verfahrwegen der Maschine ein funktionaler Zusammenhang.

Im Allgemeinen werden bei großen Elektrodengewichten sehr kleine Verfahrwege benötigt (bei Planetärbewegungen und bei Abtastungen von Referenzen beim Werkstückeinrichten), während bei kleinen Elektrodengewichten ein Verfahrweg über die gesamte Tischabmessung gewünscht wird (bei einer lokalen Bearbeitung mit Kleinelektroden.

Dies ergibt sich aus den verschiedenen Einsatzmöglichkeiten solcher Elektroden: Kleine Elektroden - z. B. in Stiftform oder anderen einfachen geometrischen Formen - können unter anderem zur Herstellung komplexer Formen und zum Erodieren in mehreren Bewegungsrichtungen genutzt werden. Bevorzugt kommen dabei beispielsweise mehrere verschiedene kleine Elektroden zum Einsatz, mit denen einzelne Werkstückabschnitte erodiert werden. Das Gewicht solcher Elektroden ist eher gering. Der Einsatz dieser Arbeitstechnik wird durch die moderne CNC-Steuertechnik möglich, die es erlaubt, die genaue Positionierung der Elektroden sehr einfach durchzuführen. Ein weiterer Vorteil der Verwendung kleiner Elektroden liegt in der einfacheren Herstellbarkeit und natürlich im unkomplizierten Ersatz einzelner besonders beanspruchter Elektroden.

Die kleineren Verfahrwege großer Elektroden erklären sich analog. Oft wird eine große Elektrode mit einem komplizierten Muster ohne ein weiteres Erodieren in der X/Y-Ebene einfach in Z-Richtung in ein Werkstück abgesenkt.

Hier muß nur noch anhand geringer Verschiebungen der Elektrode vor Beginn des Senkerodierens durch Abtastung von Referenzpunkten ein Koordinatennullpunkt bestimmt werden.

Zusammenfassend ist somit festzustellen, das ein besonderer Bedarf nach Maschinen mit einem großen Verfahrweg für kleine Elektrodengewichte besteht.

Maschinen mit beweglichem Portal besitzen zwar relativ große Verfahrwege in einer Richtung der Werkstükebene (X-Längsrichtung), nicht aber in der jeweils anderen (Y-Querrichtung). Größere Verfahrwege erreicht eine Portalkonstruktion mit zwei voneinander unabhängigen Erosionsköpfen. Dabei wird ein zweiter Kopf mit reduzierter Tragkraft durch eine zusätzliche Achse am Querbalken der Brücke befestigt. Diese Lösung ist jedoch relativ teuer.

Bei Maschinen der C-Bauweise - übliche Varianten sind z.B Maschinen mit einem verschieblichen Kreuztisch und solche mit oberen verschieblichen Schlitten - besteht der wesentliche Vorteil gegenüber der Portalkonstruktion in den niedrigeren Kosten. Eine Verfahrwegerweiterung bedeutete bisher immer auch eine wesentliche Erhöhung der Maschinenkosten, da die Dimensionierung vom maximalen Elektrodengewicht bzw. Werkstückgewicht bestimmt wird.

Aus der gattungsgemäßen FR-A 2 069 863 ist eine Mehrelektrodenmaschine bekannt, mit drei nach Art eines Bohrers um ihre eigene Achse rotierenden Elektroden. Die Elektroden sind dabei lediglich Teile eines einzigen Bearbeitungskopfes. Hierdurch soll an zwei Stellen eines Werkzeuges gleichzeitig gearbeitet werden können.

Auch zeigt die GB-A-2 163 380 eine Mehrelektrodenmaschine, bei der die Elektroden über eine Revolveranordnung austauschbar sind.

Es ist nebendem bisher möglich, eine einzelne Senkelektrode U-förmig mit nach unten offenen Schenkeln integral auszugestalten.

Die Erfindung zielt darauf ab, die Verfahrwege in der Werkstückebene auf einfache Weise zu vergrößern. Ein weiteres Ziel der Erfindung besteht darin, ein Verfahren zu schaffen, das eine einfache und bequeme Handhabung einer erfindungsgemäßen Vorrichtung ermöglicht.

Dieses Ziel wird bei der gattungsgemäßen Vorrichtung dadurch erreicht, daß sie mindestens einen weiteren Bearbeitungskopf aufweist, der am ersten Bearbeitungskopf befestigt, rund um die Z-Achse des ersten Bearbeitungskopfes verschwenkbar ist und mindestens einen eigenen Freiheitsgrad der Bewegung besitzt. Beim gattungsgemäßen Verfahren wird das Ziel durch eine Bearbeitung mit mindestens einem weiteren Bearbeitungskopf, der am ersten Bearbeitungskopf gelagert befestigt und rund um die Z-Achse des ersten Bearbeitungskopfes verschwenkt wird, wobei die Bearbeitung mit dem mindestens einen weiteren Bearbeitungskopf alternativ oder zusätzlich zu der Bearbeitung mit dem ersten Bearbeitungskopf erfolgt, erreicht.

Die Bearbeitungsfläche der Vorrichtung wird also nicht mehr durch den Verfahrweg des ersten Bearbeitungskopfes begrenzt, sondern um den Abstand zwischen der Hauptachse des ersten Bearbeitungskopfes und der Hauptachse des zweiten Bearbeitungskopfes vergrößert. Dabei braucht die bestehende Firmware zur Steuerung der Vorrichtung nur minimale erweitert bzw. abgewandelt zu werden. Durch die bewegliche Lagerung des zweiten Bearbeitungskopfes am ersten Bearbeitungskopf werden die Möglichkeiten der Bearbeitung von Werkstücken erheblich erweitert, da die Reichweite nicht nur in einer Richtung, sondern im gesamten Beweglichkeitsbereich vergrößert wird.

Eine optimale Vergrößerung der Bearbeitungsfläche wird mit einem Bearbeitungskopf erreicht, der rund um den zweiten Bearbeitungskopf verschwenkbar ist.

Bevorzugt besitzt der zweite Bearbeitungskopf mindestens einen eigenen Freiheitsgrad der Bewegung, insbesondere einen eigenen Rotationsfreiheitsgrad (C-Achse) (Anspruch 2). Der Vorteil dieser Merkmale besteht in den erweiterten Möglichkeiten zur Anwendung verschiedener Erodiertechniken (z.B. kreisend bzw. Planetärerosion) und in der Möglichkeit zur Ausrichtung des zweiten Bearbeitungskopfes je nach eingestelltem Schwenkwinkel.

Bevorzugt ist der zweite Bearbeitungskopf an einer Pinole des ersten Bearbeitungskopfes angeordnet (Anspruch 3). Damit wird die Höhenverstellbarkeit des zweiten Bearbeitungskopfes durch die Z-Verschiebung der Pinole des ersten Bearbeitungskopfes gegeben.

Eine vom ersten Bearbeitungskopf getrennte Höhenverstellbarkeit des zweiten Bearbeitungskopfes in Z-Richtung (Anspruch 4) ermöglicht es, während der Bearbeitung durch den zweiten Bearbeitungskopf die Elektrode des ersten Bearbeitungskopfes in der Spannvorrichtung montiert zu lassen und eine größere Höhenverstellung zu erreichen, die sonst durch die Größe der eingesetzten Elektrode bzw. durch die untere Kante der Spannvorrichtung des ersten Bearbeitungskopfes begrenzt ist. In diesem Fall besitzt der zweite Bearbeitungskopf eine eigene Pinole.

Das Verschwenken des zweiten Bearbeitungskopfes um die Z-Achse des ersten Bearbeitungskopfes kann mit der Unterstützung eines Antriebs erfolgen (Anspruch 5). Eine manuelle Verschwenkeinrichtung ist zwar besonders preisgünstig zu verwirklichen, durch einen Motorantrieb wird die Bedienung jedoch automatisiert und vereinfacht.

Eine mechanische oder pneumatische Positionier-Klemmung zur Arretierung des zweiten Bearbeitungskopfes (Anspruch 6) erhöht die Steifigkeit des zweiten Bearbeitungskopfes im Bezug auf den ersten Bearbeitungskopf während der Bearbeitung eines Werkstückes. Besonders einfach ist diese Arretierung mit Hilfe einer pneumatischen Klemmvorrichtung zu realisieren.

Besonders bevorzugt ist der zweite Bearbeitungkopf automatisch steuerbar (Anspruch 7), so daß die Bedienung unkompliziert ist. Durch eine Ausgestaltung der Steuervorrichtung, die es erlaubt, eine zu bearbeitende Position des Werkstückes direkt in Koordinatenform einzugeben (Anspruch 8) und die je nach den zu bearbeitenden Stellen des Werkstücks automatisch , ohne Eingriff des Operateurs, zwischen den beiden Bearbeitungsköpfen umschaltet (Anspruch 9), wird die Steuerung der Vorrichtung weiter automatisiert und verbessert.

Bevorzugt wird die Vorrichtung in Form einer Elektroerosions-Senkmaschine ausgestaltet, da besonders bei Elektroerodiermaschinen ein Bedarf nach gößeren Verfahrwegen besteht. Dabei hat der erste Bearbeitungskopf eine Pinole mit einer Spanneinrichtung für eine Senkelektrode und der zweite Bearbeitungskopf eine bevorzugt verkleinerte Pinole und ebenfalls eine Spanneinrichtung für eine Senkelektrode (Anspruch 10).

Besonders bevorzugt wird die Maschine in C-Gestellbauweise mit einem Kreuztisch und/oder einem oberen Schlitten aufgebaut (Anspruch 11). Die kostengünstige C-Bauweise wird somit noch um den weiteren Vorteil des größeren Verfahrweges verbessert. Die Erfindung ist jedoch auch bei Portalkonstruktionen anwendbar.

Bevorzugt ist im Spannsystem des zweiten Bearbeitungskopfes eine Meßtaste angeordnet, die ein leichtes und automatisches Ausmessen eines zu bearbeitenden Werkstückes in der Bearbeitungsfläche erlaubt (Anspruch 12).

Die Bearbeitung mit dem zweiten Bearbeitungskopf (Anspruch 13) ermöglicht eine Vielzahl an Kombinationen von Bearbeitungstechniken (große Elektroden und kleine Elektroden). Sie wird dadurch vereinfacht, daß die Bearbeitungsfläche in eine zentrale und mehrere äußere Bearbeitungsflächen aufgeteilt wird (Anspruch 14). Ein Vorteil dieses Bearbeitungsverfahren liegt darin, daß die herkömmliche Steuerung nur minimal erweitert werden muß. Bevorzugt wird dabei jeder Bearbeitungsfläche ein Referenzpunkt zugeordnet. Der zweite Bearbeitungskopf wird zur Bearbeitung von Arbeitskoordinaten außerhalb des zentralen Bearbeitungsfeldes auf den Referenzpunkt eines entsprechenden Bearbeitungsfeldes bewegt.

Die Steuerung des zweiten Bearbeitungskopfes erfolgt bevorzugt durch bestehende Firmware zur Steuerung des ersten Bearbeitungskopfes unter Berücksichtigung der Verschiebung des Koordinatenursprungs auf einen jeweiligen Referenzpunkt (Anspruch 15). Die herkömmliche Steuerung der Maschine muß somit nur um eine weitere Grobbewegung - das Verschwenken - ergänzt werden. Besonders bevorzugt wird das Verfahren um den Schritt des Anspruchs 18 ergänzt, also durch eine automatische Drehbewegung der C-Achse des zweiten Bearbeitungskopfes. Dies bewirkt einen automatischen Ausgleich des Verschwenkens des zweiten Bearbeitungskopfes um die Z-Achse.

Eine automatische Korrektur der Schwenkachsenposition X,Y,Z durch vorgespeicherte elektronische Maschinenkorrekturparameter (Anspruch 17) erhöht die Bearbeitungsgenauigkeit des zweiten Bearbeitungskopfes.

Das Ausmessen eines zu bearbeitenden Werkstükes in der Bearbeitungsfläche kann leicht und automatisch mittels einer im Spannsystem des zweiten Bearbeitungskopfes angeordneten Meßtaste durchgeführt werden (Anspruch 18).

Weitere bevorzugte Merkmale der Erfindung ergeben sich aus der nachfolgenden Beschreibung bevorzugter Ausführungsbeispiele. Diese Ausführungsbeispiele sind schematisch in der beigefügten Zeichnung dargestellt, die auch den Unterschied zwischen erfindungsgemäßen Vorrichtungen und dem bereits geschilderten Stand der Technik bildlich veranschaulicht.

In der Zeichnung zeigen:
- Fig. 1: eine Draufsicht auf einen Arbeitstisch einer bekannten Vorrichtung mit einer herkömmlichen "großen" Bearbeitungsfläche;
- Fig. 2: eine Draufsicht auf einen Arbeitstisch einer bekannten Vorrichtung mit einer herkömmlichen "kleinen" Bearbeitungsfläche;
- Fig. 3: eine Draufsicht auf einen Arbeitstisch einer erfindungsgemäßen Vorrichtung;
- Fig. 4: eine schematische Querschnittsansicht eines erfindungsgemäßen Ausführungsbeispieles einer Erodier-Senkmaschine;
- Fig. 5: einen erfindungsgemäßen Bearbeitungskopf nach Fig. 4;
- Fig. 6: ein weiteres Ausführungsbeispiel eines erfindungsgemäßen Bearbeitungskopfes;
- Fig. 7: eine Draufsicht auf einen schematisch dargestellten Arbeitstisch einer erfindungsgemäßen Vorrichtung mit vergrößerter Bearbeitungsfläche;

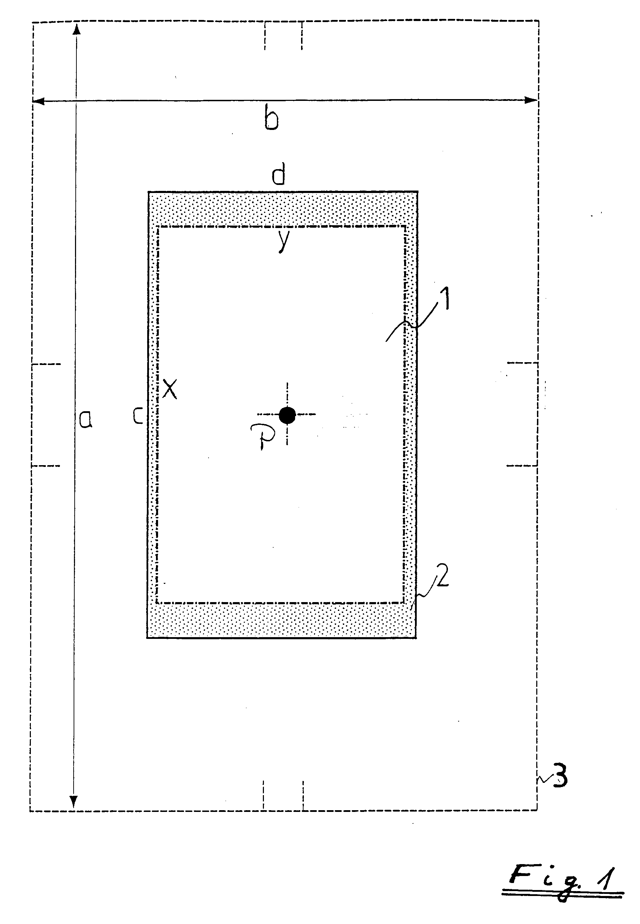

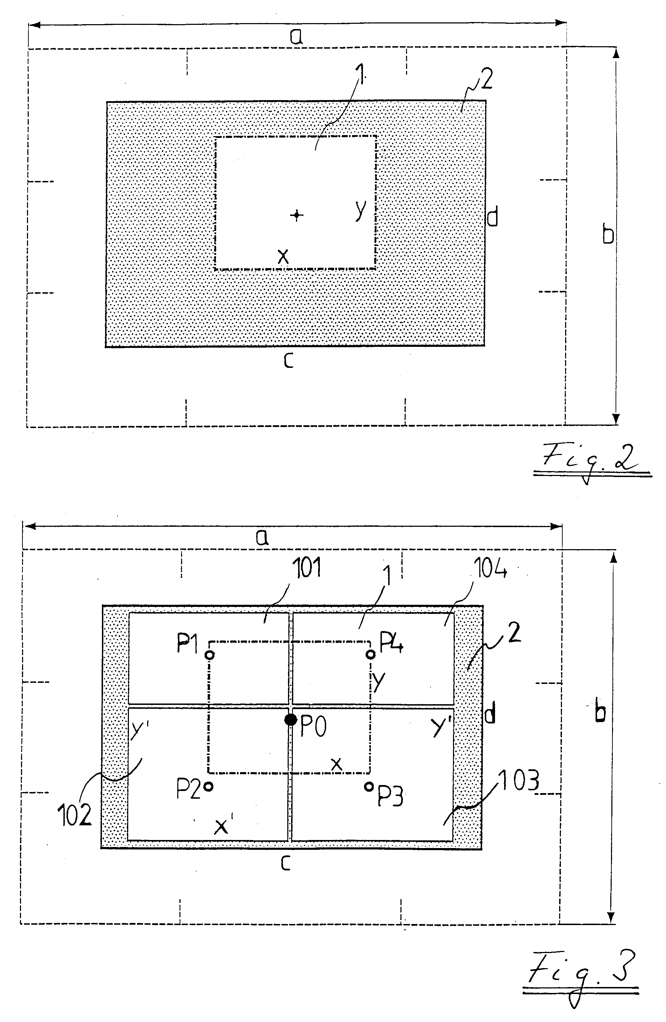

Die Fig. 1 - 3 zeigen im verkleinerten Maßstab den ungefähren Platzbedarf verschiedener Ausführungsbeispiele von Elektroerosions-Senkmaschinen. Die Ausführungsbeispiels der Fig. 1 und 2 entsprechen dabei dem Stand der Technik. Alle Maßangaben sind nur als ungefähre Richtlinie zur Veranschaulichung zu verstehen, sie enstammen einem für den Handel bestimmten Ausführungsbeispiel.

In den Fig. 1 - 3 sind jeweils eine oder mehrere Bearbeitungsflächen 1, 101, 102, 103, 104, ein Maschinentisch 2 und die Außenabmessungen a, b der Vorrichtung dargestellt. Wird z.B. in X-Richtung ein Verfahrweg von 1,2 m und in Y-Richtung einer von 0,8 m gewünscht, erfordert eine herkömmliche Vorrichtung in C-Gestellbauweise eine äußere Abmessung a * b von ca. 2,6 * 1,7 m (Fig. 1). Der reine Maschinenplatzbedarf beträgt somit ca. 4,5 m² und ist damit im Verhältnis zur Bearbeitungsfläche zu groß. Die Maschine ist damit unwirtschaftlich.

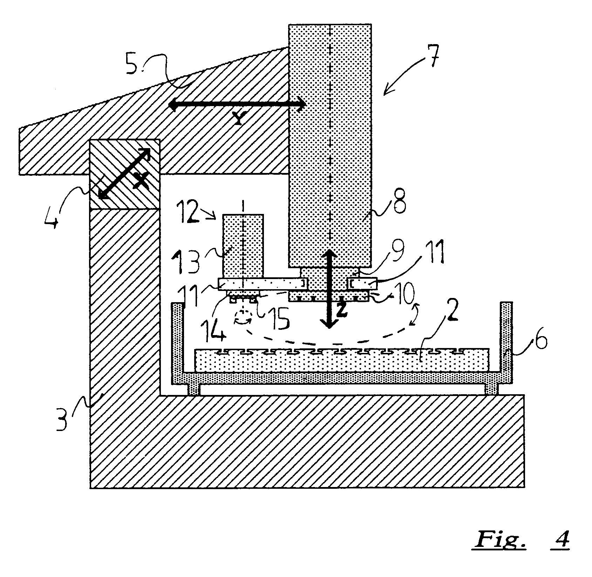

Durch eine erfindungsgemäße Vorrichtung mit den Merkmalen der Ansprüche 1 und 2 - die Erfindung entstand im Rahmen von Untersuchungen für die Erweiterung der Verfahrwege bestehender Anlagen -, kann eine Bearbeitungsfläche von 1,2 * 0,8 m bereits mit einer Vorrichtung mit einem Außenmaß a * b von ca. 2 * 1,4 m erreicht werden. In Fig. 2 ist die X-/Y-Bearbeitungsfläche 1 einer bekannten Vorrichtung dieser Außenmaße schematisch in Draufsicht dargestellt. Die Bearbeitungsfläche 1 hat ein Maß von 0,6 * 0,5 m. Da sich die Pinolenachse nicht im Zentrum des Bearbeitungstisches befindet, ist die Bearbeitungstiefe von der Pinolenachse aus in pos. und neg. Y-Richtung konstruktiv bedingt unterschiedlich (z.B. Y+ = 0,3 m und Y- = 0,2 m). Mit einem zweiten Bearbeitungskopf 12 (Fig. 4), der einen Schwenkradius von ca. 390 mm hat, läßt sich der Bearbeitungsraum a * b auf die gewünschten 1,2 * 0,8 m vergrößern.

Der übliche Aufbau der Maschine gestattet nicht ein volles Ausnutzen der Schwenkachse, da die Felder 101 und 104 durch die Asymmetrie der Bewegung in Y-Richtung gegenüber dem Behälter begrenzt sind. Der besondere Vorteil ist jedoch, daß der Platzbedarf für den Behälter der Maschine und seine Bewegung unverändert bleibt und daß eine bestehende Maschine so mit einfachen Mitteln kostengünstig erweitert bzw. nachgerüstet werden kann. Bei einer Neukonstruktion mit der Pinolenachse eines ersten Bearbeitungskopfes 7 (Fig. 4) im Mittelpunkt des Arbeitsbehälters (Fig. 7) kann auch diese Asymmetrie behoben werden.

Die Fig. 4 zeigt den Prinzipaufbau einer erfindungsgemäßen Vorrichtung anhand eines bevorzugten Ausführungsbeispieles einer Elektroerosions-Senkmaschine. Die Maschine besteht neben den üblichen, hier nicht gezeigten Komponenten, wie z.B. numerische Steuerung, Generator und Dielektrikumsaufbereitung aus einem C-Rahmen 3, einem oberen X-Schlitten 4, einem oberen Y-Schlitten 5, einem Dielektrikumsbehälter 6 und dem Maschinentisch 2. Am Y-Schlitten 5 ist der erste Bearbeitungskopf 7 befestigt, der einen Maschinenkopf 8, eine Pinole 9 und einen Elektrodenhalter 10 hat.

Der erste Bearbeitungskopf 7 ist bevorzugt in Z-Richtung, also senkrecht zur Hauptbearbeitungsebene X/Y verschiebbar. Mittels einer Halterung 11, die an der Pinole 9 des ersten Berarbeitungskopfes 7 angebracht ist, wird der zweite Bearbeitungskopf 12 am ersten Bearbeitungskopf 7 beweglich gelagert. Der zweite Bearbeitungskopf 12 ist um den ersten Bearbeitungskopf 7 verschwenkbar, die Z-Achse bzw. die Pinolenachse des ersten Bearbeitungskopfes 7 wird somit nachfolgend auch als Schwenkachse bezeichnet.

Der zweite Bearbeitungskopf 12 hat ein Kopfteil 13, eine C-Achse 14 und eine Spanneinrichtung 15 für eine Senkelektrode, die bevorzugt mit einer Meßtaste zum Ausmessen eines zu bearbeitenden Werkstückes versehen ist. Der zweite Bearbeitungskopf 12 kann auch starr mittels der Halterung 11 am ersten Bearbeitungskopf 7 befestigt sein oder - besonders bevorzugt -, um einen bestimmten Winkel oder rund um den ersten Bearbeitungskopf 7 verschwenkbar sein. Durch einen eigenen Freiheitsgrad der Bewegung - eine Rotation um die C-Achse - kann die Orientierung der Elektrode in jeder beliebigen Lage der Schwenkachse konstant gehalten werden.

Durch eine Höhenverstellbarkeit der Elektrode des zweiten Bearbeitungskopfes 12, das heißt durch eine eigene Pinole (nicht abgebildet), werden die Einsatzmöglichkeiten des zweiten Bearbeitungskopfes 12 noch erweitert. Der besondere Vorteil einer solchen Ausgestaltung liegt darin, daß die zweite Senkelektrode tiefer in das Werkstück abgesenkt werden kann, als dies bei einer Elektrode ohne diesen eigenen Freiheitsgrad möglich wäre.

Der Arbeitsraum der Senkmaschine ist somit in X- und in Y-Richtung um etwa den doppelten Abstand zwischen der Pinolenachse des ersten Bearbeitungskopfes 7 und der Pinolenachse des zweiten Bearbeitungskopfes 12 vergrößert - da das Verschwenken rundum erfolgen kann.

Es sind natürlich auch Ausführungsformen möglich, bei denen das Verschwenken der Pinole auf einen bestimmten Winkel beschränkt bleibt. Ebenfalls möglich ist eine Ausführungsform mit mehreren weiteren Bearbeitungsköpfen 12 (z. B. mit vier weiteren Köpfen), die auch starr durch die Halterungen 11 mit dem ersten Bearbeitungskopf 7 verbunden sein können. Eine solche Konstruktion ist zwar etwas aufwendiger, sie vergrößert jedoch auch die Bearbeitungsfläche. Alle Schwenkbewegungen fallen dabei weg.

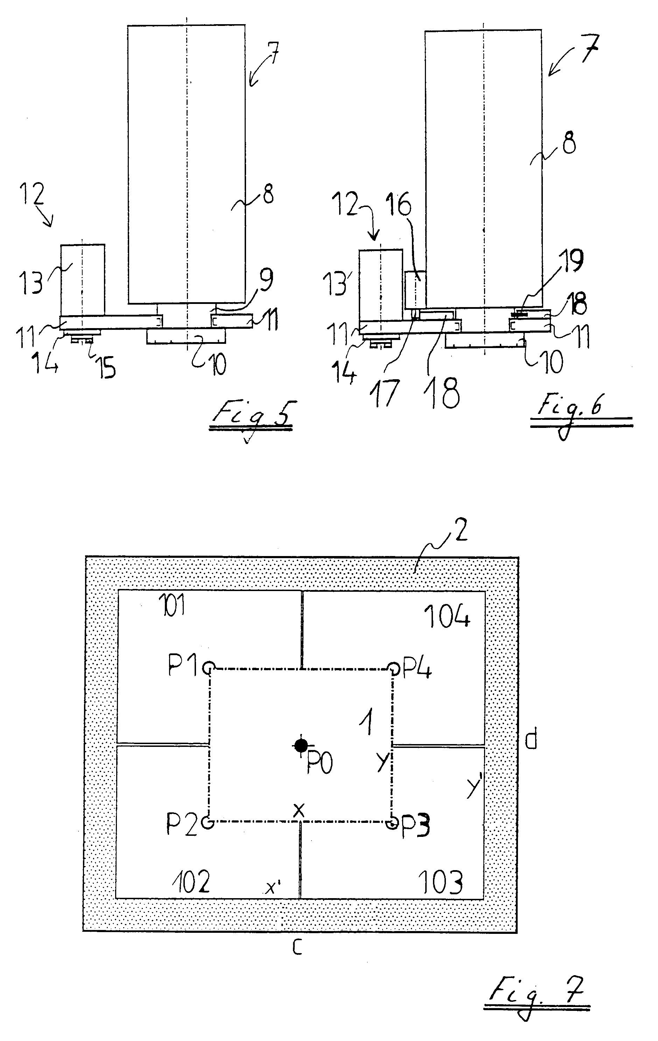

Durch den vorstehend beschriebenen Aufbau werden besonders die Verfahrwege für kleinere Elektrodengewichte vergrößert. Die Verfahrwege und die Konstruktion der Maschine für große Elektroden sowie für große Werkstückgewichte verändern sich dabei nicht. Der Aufbau ist insbesondere dazu geeignet, den Arbeitsraum bestehender Maschinen nachträglich kostengünstig zu vergrößern. Diese Vergrößerung des Arbeitsraumes wird selbstverständlich auch dann erreicht, wenn ein (analog zu den Fig. 5 und 6) konstruierter Aufbau aus einem ersten und zumindest einem weiteren Bearbeitungskopf 7, 12 an einer Maschine in Portalbauweise oder an einer Maschine mit einem in X/Y-Richtung verschiebbaren Maschinentisch befestigt wird. Auch kann z.B. der Arbeitsraum einer Fräsmaschine mit einem derartigen Aufbau vergrößert werden. Bereits bestehende Firmware zur Steuerung der Maschine kann übernommen werden und erfordert nur geringfügige Erweiterungen.

In Fig. 6 ist der Aufbau der zwei Arbeitsköpfe 7, 12 noch um einen Antrieb 16 erweitert dargestellt. Damit ist ein automatisches Verschwenken des zweiten Bearbeitungskopfes 12 um den ersten Bearbeitungskopf 7 möglich. Rein schematisch sind in der Fig. 6 ein Antrieb 16 (z.B. ein Schrittmotor), ein Getriebe 17 und ein Antriebsaufnehmer 18 dargestellt. Durch eine Positionierklemmung 19 ist der Antriebsaufnehmer 18 arretierbar. Der zweite Bearbeitungskopf 12 kann so in einem konstanten Winkel zum ersten Bearbeitungskopf 7 gehalten werden.

Der Einsatz der zwei Bearbeitungsköpfe 7, 12 erfolgt dabei bevorzugt in der nachfolgend beschriebenen Weise.

Wie in Fig. 7 abgebildet, wird die X/Y-Bearbeitungsfläche in ein zentrales Bearbeitungsfeld 1 und mehrere äußere Bearbeitungsflächen 101, 102, 103, 104 aufgeteilt. Bevorzugt werden vier oder sechs äußere Bearbeitungsflächen gewählt. Jeder Bearbeitungsfläche wird ein Referenzpunkt zugeordnet. Der erste Bearbeitungskopf 7 kann wie gewohnt für den Arbeitsbereich 1 eingesetzt werden. Der zweite Bearbeitungskopf 12 wird bevorzugt beim Auftreten von Koordinaten außerhalb der Fläche 1 eingesetzt. Dazu wird er auf einen entsprechenden Referenzpunkt P1, P2, P3, P4 geschwenkt. Dort kann er der Positionierklemmung 17 arretiert werden. Die Elektrode des zweiten Bearbeitungskopfes wird durch eine Rotation um die C-Achse ausgerichtet und der Koordinatenursprung der Steuerung wird in den angesteuerten Referenzpunkt gelegt. Bereits eine begrenzte Anzahl (vier bis sechs) vorbestimmter Positionen erlauben mehr als 95% der Tischfläche zu erreichen. Die Arbeitsfläche 101 - 104 ist vier mal größer als das ursprüngliche Bearbeitungsfeld 1 mit den Außenmaßen x und y.

Durch den Einsatz moderner CNC ist die Einführung einer zusätzlichen Grobbewegung, die Speicherung von Referenzpunkten sowie ihre automatische Umschaltung ohne Nachteile für den Operateur.

Ein weiterer Vorteil der Erfindung besteht in den Vereinfachungsmöglichkeiten der Elektrodenmagazine und Wechsler. Die Elektrodenhalter müssen nicht weiter beweglich sein, was eine weitere Vereinfachung und Verbilligung der Maschine bedeutet. Durch die Schwenkbarkeit des zweiten Bearbeitungskopfes ist es möglich, die Wechselelektroden auf jedem beliebigen Platz im Behälter zu lagern.

## Patentansprüche

1. Funkenerosionsvorrichtung zur Bearbeitung von Werkstücken mit
a) einem Maschinentisch (2) zur Auflage eines Werkstückes,
b) einem ersten Bearbeitungskopf (7),
c) mindestens zwei Freiheitsgraden der Bewegung in und/oder parallel zur Haupt-Arbeitsebene des Werkstückes (X/Y-Ebene),
d) mindestens einem weiteren Freiheitsgrad der Bewegung senkrecht zur Haupt-Arbeitsebene (Z-Achse),
gekennzeichnet durch
e) mindestens einen weiteren Bearbeitungskopf (12), der am ersten Bearbeitungskopf (7) beweglich gelagert befestigt, rund um die Z-Achse des ersten Bearbeitungskopfes (7) verschwenkbar ist und mindestens einen eigenen Freiheitsgrad der Bewegung besitzt.

2. Vorrichtung nach Anspruch 1, dadurch gekennzeichnet, daß der zweite Bearbeitungskopf (12) einen eigenen Rotationsfreiheitsgrad (C-Achse) besitzt.

3. Vorrichtung nach Anspruch 1 oder 2, dadurch gekennzeichnet, daß der zweite Bearbeitungskopf (12) an einer Pinole (9) des ersten Bearbeitungskopfes (7) angeordnet ist.

4. Vorrichtung nach einem der Ansprüche 1 - 3, dadurch gekennzeichnet, daß der zweite Bearbeitungskopf (12) getrennt vom ersten (7) höhenverstellbar (Z-Richtung) ist.

5. Vorrichtung nach einem der Ansprüche 1 - 4, gekennzeichnet durch einen Antrieb (16), mit dessen Unterstützung der zweite Bearbeitungskopf (12) schwenkbar ist.

6. Vorrichtung nach einem der Ansprüche 1 - 5, gekennzeichnet durch eine mechanische oder pneumatische Positionierklemmung (19) zur Arretierung des zweiten Bearbeitungskopfes (12).

7. Vorrichtung nach einem der Ansprüche 5 oder 6, dadurch gekennzeichnet, daß der zweite Bearbeitungskopf (12) automatisch steuerbar ist.

8. Vorrichtung nach Anspruch 7, gekennzeichnet durch eine Steuervorrichtung, die es erlaubt, eine zu bearbeitende Position des Werkstückes direkt in Koordinatenform einzugeben.

9. Vorrichtung nach einem der Ansprüche 7 oder 8, gekennzeichnet durch eine Steuerung, die je nach den zu bearbeitenden Stellen des Werkstücks automatisch zwischen den beiden Bearbeitungsköpfen (7, 12) umschaltet.

10. Vorrichtung nach einem der Ansprüche 1 - 9, nämlich Elektroerosionsmaschine, insbesondere Elektroerosions-Senkmaschine, dadurch gekennzeichnet, daß
a) der erste Bearbeitungskopf (7) eine Pinole (9) mit einer Spanneinrichtung (10) für eine Senkelektrode hat,
b) der zweite Bearbeitungskopf (12) eine Pinole mit einer Spanneinrichtung (15) für eine Senkelektrode hat.

11. Elektroerosions-Senkmaschine nach Anspruch 10, dadurch gekennzeichnet, daß die Maschine in C-Gestellbauweise (3) mit einem Kreuztisch und/oder einem oberen Schlitten (4, 5) aufgebaut ist.

12. Elektroerosions-Senkmaschine nach Anspruch 10 oder 11, dadurch gekennzeichnet, daß im Spannsystem (15) des zweiten Bearbeitungskopfes (12), eine Meßtaste für ein automatisches Ausmessen des Werkstückes in der Bearbeitungsfläche (1, 101, 102, 103, 104) vorgesehen ist.

13. Verfahren zur Bearbeitung von Werkstücken, insbesondere Funkenerosionsverfahren, bei dem
a) ein Werkstück auf einem Maschinentisch (2) mit einem ersten Bearbeitungskopf (7) mindestens in zwei Bewegungsrichtungen in und/oder parallel zur Haupt-Arbeitsebene des Werkstückes (X/Y-Ebene) und in mindestens einer weiteren Richtung (Z-Achse) senkrecht zur Hauptbearbeitungsebene bearbeitet wird,
gekennzeichnet durch
b) eine Bearbeitung mit mindestens einem weiteren Bearbeitungskopf (12), der am ersten Bearbeitungskopf (7) beweglich gelagert befestigt und rund um die Z-Achse des ersten Bearbeitungskopfes (7) verschwenkt wird, wobei die Bearbeitung mit dem mindestens einen weiteren Bearbeitungskopf (12) alternativ oder zusätzlich zu der Bearbeitung mit dem ersten Bearbeitungskopf (7) erfolgt.

14. Verfahren nach Anspruch 13, dadurch gekennzeichnet, daß die Bearbeitungsfläche (1, 101, 102, 103, 104) in eine zentrale (1) und mehrere äußere Bearbeitungsflächen (101, 102, 103, 104) aufgeteilt wird.

15. Verfahren nach Anspruch 13 oder 14, bei dem
a) jeder Bearbeitungsfläche (1, 101, 102, 103, 104) ein Referenzpunkt (P0, P1, P2, P3, P4) zugeordnet wird,
b) der zweite Bearbeitungskopf (12) beim Auftreten von Arbeitskoordinaten außerhalb des zentralen Bearbeitungsfeldes (1) auf den Referenzpunkt (P1, P2, P3, P4) eines entsprechenden Bearbeitungsfeldes (101, 102, 103, 104) bewegt wird,
c) die Steuerung des zweiten Bearbeitungskopfes (12) durch die bestehende Firmware zur Steuerung des ersten Bearbeitungskopfes (7) unter Berücksichtigung der Verschiebung des Koordinatenursprungs auf den jeweiligen Referenzpunkt (P1, P2, P3, P4) erfolgt.

16. Verfahren nach einem der Ansprüche 13 - 15, gekennzeichnet durch eine automatische Drehbewegung der C-Achse des zweiten Bearbeitungskopfes (12) zum Ausgleich des Schwenkens um die C-Achse.

17. Verfahren nach einem der Ansprüche 13 - 16, gekennzeichnet durch eine automatische Korrektur der Schwenkachsenposition X,Y,Z durch vorgespeicherte elektronische Maschinenkorrekturparameter.

18. Verfahren nach einem der Ansprüche 13 - 17, gekennzeichnet durch den Einsatz einer Meßtaste im Spannsystem des zweiten Bearbeitungskopfes (12) für ein automatisches Ausmessen des Werkstückes in der Bearbeitungsfläche (1, 101, 102, 103, 104).

## Claims

1. Electroerosion apparatus for the machining of workpieces with
a) a machine table (2) for supporting a workpiece,
b) a first machining head (7),
c) at least two degrees of freedom of movement of the apparatus in and/or parallel to the principal working plane of the workpiece (X/Y plane),
d) at least one further degree of freedom of movement perpendicularly to the principal working plane (Z axis),
characterised by
e) at least one further machining head (12) which is fixed movably to the first machining head (7), is pivotable around the Z axis of the first machining head (7) and has at least one degree of freedom of movement of its own.

2. Apparatus according to claim 1, characterised in that the second machining head (12) has at least one degree of freedom of rotation of its own (C axis).

3. Apparatus according to claim 1 or 2, characterised in that the second machining head (12) is arranged on a sleeve (9) of the first machining head (7).

4. Apparatus according to any of claims 1-3, characterised in that the second machining head (12) is vertically displaceable (Z direction) separately from the first one (7).

5. Apparatus according to any of claims 1-4, characterised by a drive (16) with the assistance of which the second machining head (12) is pivotable.

6. Apparatus according to any of claims 1-5, characterised by a mechanical or pneumatic positioning-clamping device (19) for locking the second machining head (12).

7. Apparatus according to either of claims 5 or 6, characterised in that the second machining head (12) is automatically controllable.

8. Apparatus according to claim 7, characterised by a control device which allows a position of the workpiece to be machined to be fed in directly in coordinate form.

9. Apparatus according to either of claims 7 or 8, characterised by a control device which automatically switches between the two machining heads (7, 12), depending on the points of the workpiece to be machined.

10. Apparatus according to any of claims 1-9, namely electroerosion machine, in particular electroerosion cavity sinking machine, characterised in that
a) the first machining head (7) has a sleeve (9) with a clamping device (10) for a cavity sinking electrode,
b) the second machining head (12) has a sleeve with a clamping device (15) for a cavity sinking electrode.

11. Electroerosion cavity sinking machine according to claim 10, characterised in that the machine is designed with a C-frame construction (3) with a cross table and/or an upper carriage (4, 5).

12. Electroerosion cavity sinking machine according to claim 10 or 11, characterised in that in the clamping system (15) of the second machining head (12) is arranged a measuring key for automatic measurement of the workpiece in the machining area (1, 101, 102, 103, 104).

13. Method for the machining of workpieces, in particular electroerosion method, in which
a) a workpiece is machined on a machine table (2) with a first machining head (7) in at least two directions of movement in and/or parallel to the principal working plane of the workpiece (X/Y plane) and in at least one further direction (Z axis) perpendicularly to the principal plane of machining,
characterised by
b) machining with at least one further machining head (12) which is fixed movably with bearings to the first machining head (7) and pivoted around the Z axis of the first machining head (7), wherein machining with the at least one further machining head (12) takes place alternatively or in addition to machining with the first machining head (7).

14. Method according to claim 13, characterised in that the machining area (1, 101, 102, 103, 104) is divided into one central (1) and several outer machining areas (101, 102, 103, 104).

15. Method according to claim 13 or 14, in which
a) a reference point (P0, P1, P2, P3, P4) is associated with each machining area (1, 101, 102, 103, 104),
b) the second machining head (12), when working coordinates arise outside the central machining zone (1), is moved to the reference point (P1, P2, P3, P4) of a corresponding machining zone (101, 102, 103, 104),
c) control of the second machining head (12) takes place by the existing firmware for control of the first machining head (7), taking into account the displacement of the origin of coordinates to the respective reference point (P1, P2, P3, P4).

16. Method according to any of claims 13-15, characterised by an automatic rotational movement of the C axis of the second machining head (12) to compensate for pivoting about the C axis.

17. Method according to any of claims 13-16, characterised by automatic correction of the pivot axis position X, Y, Z by prestored electronic machine correction parameters.

18. Method according to any of claims 13-17, characterised by the use of a measuring key in the clamping system of the second machining head (12) for automatic measurement of the workpiece in the machining area (1, 101, 102, 103, 104).

## Revendications

1. Dispositif à électro-érosion pour l'usinage de pièces, équipé
a) d'une table de machine-outil (2) pour le support d'une pièce,
b) d'une première tête d'usinage (7),
c) d'au moins deux degrés de liberté de mouvement dans et/ou parallèlement au plan de travail principal de la pièce (plan X/Y),
d) et d'au moins un autre degré de liberté de mouvement perpendiculairement au plan de travail principal (axe Z).
caractérisé par
e) au moins une autre tête d'usinage (12) qui est fixée et disposée de façon mobile sur la première tête d'usinage (7) et peut pivoter tout autour de l'axe Z de la première tête d'usinage et a au moins un degré de liberté propre de mouvement.

2. Dispositif selon la revendication 1, caractérisé en ce que la deuxième tête d'usinage (12) a un degré de liberté de rotation (axe C) qui lui est propre.

3. Dispositif selon la revendication 1 ou 2, caractérisé en ce que la deuxième tête d'usinage (12) est disposée sur un fourreau (9) de la première tête d'usinage (7).

4. Dispositif selon d'une des revendications 1 à 3, caractérisé en ce que la deuxième tête d'usinage (12) est réglable en hauteur (sens Z) séparément de la première (7).

5. Dispositif selon l'une des revendications 1 à 4, caractérisé par un moteur (16) avec l'assistance duquel on peut faire pivoter la deuxième tête d'usinage (12).

6. Dispositif selon l'une des revendications 1 à 5, caractérisé par un dispositif mécanique ou pneumatique de blocage de positionnement (19) pour le verrouillage de la deuxième tête d'usinage (12).

7. Dispositif selon l'une des revendications 5 ou 6, caractérisé en que la deuxième tête d'usinage (12) peut être commandée automatiquement.

8. Dispositif selon la revendication 7, caractérisé par un dispositif de commande qui permet d'entrer une position à usiner de la pièce directement sous la forme de coordonnées.

9. Dispositif selon l'une des revendications 7 ou 8, caractérisé par une commande qui commute automatiquement entre les deux têtes d'usinage (7, 12) en fonction des positions à usiner de la pièce.

10. Dispositif selon l'une des revendications 1 à 9, c'est à dire machine à électro-érosion, caractérisé en ce que
a) la première tête d'usinage (7) a un fourreau (9) avec un dispositif de serrage (10) pour une électrode de lamage,
b) en ce que la deuxième tête d'usinage (12) a un fourreau avec un dispositif de serrage (15) pour une électrode de lamage.

11. Machine de lamage à électro-érosion selon la revendication 10, caractérisée en ce que la machine en forme de bâti en C (3) est montée avec une table à mouvements croisés et/ou un chariot supérieur (4, 5).

12. Machine de lamage à électro-érosion selon la revendication 10 ou 11, caractérisée en ce que, dans le système de serrage (15) de la deuxième tête d'usinage (12), une touche de mesure est prévue pour un mesurage automatique de la pièce dans la surface d'usinage (1, 101, 102, 103, 104).

13. Procédé pour l'usinage de pièces, notamment procédé d'électro-érosion, avec lequel
a) une pièce est usinée sur une table de machine-outil (2) avec une première tête d'usinage (7) au moins dans deux sens de mouvement dans et/ou parallèlement au plan de travail principal de la pièce (plan X/Y) et au moins un autre sens (axe Z) perpendiculairement au plan d'usinage principal,
caractérisé par
b) un usinage avec au moins une autre tête d'usinage (12) qui est fixée et logée de façon mobile sur la première tête d'usinage (7) et que l'on fait pivoter tout autour de l'axe Z de la première tête d'usinage (7), l'usinage se faisant avec au moins une autre tête d'usinage (12) en remplacement ou en supplément de l'usinage avec la première tête d'usinage (7).

14. Procédé selon la revendication 13, caractérisé en ce que la surface d'usinage (1, 101, 102, 103, 104) est répartie entre une surface d'usinage centrale (1) et plusieurs surfaces d'usinage extérieures (101, 102, 103, 104).

15. Procédé selon la revendication 13 ou 14, avec lequel
a) un point de référence (P0, P1, P2, P3, P4),est attribué à chaque surface d'usinage (1, 101, 102, 103,
b) lors de l'apparition de coordonnées de travail en dehors de la zone d'usinage centrale (1), la deuxième tête d'usinage (12) est déplacée au point de référence (P1, P2, P3, P4) d'une zone d'usinage appropriée (101, 102, 103, 104).
c) la commande de la deuxième tête d'usinage (12) se fait par le firmware existant pour la commande de la première tête d'usinage (7) compte-tenu du déplacement de l'origine des coordonnées au point de référence respectif (P1, P2, P3, P4).

16. Procédé selon l'une de revendications 13 à 15, caractérisé par un mouvement de rotation automatique de l'axe C de la deuxième tête d'usinage (12) pour la compensation du pivotement autour de l'axe C.

17. Procédé selon l'une des revendications 13 à 16, caractérisé par une correction automatique de la position de l'axe de pivotement X,Y,Z par des paramètres électroniques préstockés pour la correction de la machine.

18. Procédé selon l'une des revendications 13 à 17, caractérisé par l'utilisation d'une touche de mesure dans le dispositif de serrage de la deuxième tête d'usinage (12) pour un mesurage automatique de la pièce dans la surface d'usinage (1, 101, 102, 103, 104).
